# EUROPEAN PATENT SPECIFICATION

(11) **EP 2 891 843 B1**
(45) Date of publication and mention of the grant of the patent: **18.07.2018**
(21) Application number: 15150184.8
(22) Date of filing: 06.01.2015
(51) Int. Cl.: F23G 5/48, F23G 7/10, F23G 7/00

(54) **Method for combusting waste with a mineral additive**
Verfahren zur Müllverbrennung mit Mineraladditivbeimischungen
Procédé pour la combustion de déchets avec un additif minéral

(30) Priority: 07.01.2014 EP 14368004
(43) Date of publication of application: 08.07.2015
(73) Proprietor: Imerys Ceramics France, 75007 Paris (FR)
(72) Inventor: RAVAGNANI, Christian, 13540 Puyricard-Aix-en-Provence (FR); SEVAGEN, Alexandre, 87000 Limoges (FR); PERRONNET, Murielle, 87100 Limoges (FR)
(74) Representative: Johnston, Magnus George

(56) References cited:
- WO-A1-2013/093097
- WO-A1-2013/093210
- US-A1- 2010 248 168
- US-A1- 2013 312 646

## Description

### Technical Field

The present disclosure relates to mineral additive compositions and a method for operating furnaces, and more particularly, to methods for operating waste-to-energy furnaces such as fluidized-bed reactors, pulverized-fuel combustors or grate combustors by introduction of mineral into the furnace with the aim to improve operational performance and availability, increase the lifetime of combustor building materials (refractories and heat-exchange metallic tubes) and flue gas treatment equipment, improve ash quality, reduce emissions and avoid combustion problems such as agglomeration, slagging, deposition and corrosion.

### Background

Combustion processes may be used in power plant furnaces to generate heat for operating a boiler or steam generator, which generates electric power. In some instances the fuel used for such processes may include mixed heterogeneous wastes such as municipal solid waste, biomass waste, animal waste, and industrial wastes. Often, such waste materials have a relatively high ash content in comparison to more traditional fuels such as coal or oil, and in some instances have an ash content greater than 10% to 20% by weight.

In addition to ash, waste derived fuels may also include inorganic volatiles, such as alkalis, alkaline earths, chlorine, fluorine, sulfur and metals.

Waste to energy furnaces utilities operate by combusting a waste fuel in a furnace. Heat from the furnace is then used to boil water for steam to provide heat, or to turn turbines that eventually result in the production of electricity. In a typical waste to energy power plant, waste material, such as municipal solid waste, is fed into the furnace and burned in the presence of oxygen at a combustion temperature ranging from about 850° C to about 1700° C. The combustion gases (flue gas) contain carbon dioxide, nitrogen oxides, and may contain other various undesirable inorganic volatile components including alkalis, alkaline earths, sulfur, chlorine, fluorine and metals such as, iron, zinc, antimony, vanadium, arsenic, cadmium, barium, lead, nickel, chromium, cobalt, copper, manganese, tin, and mercury. In addition, the combustion gases also typically include entrained ash which may necessitate the use of particulate removal systems and scrubbers.

In order to increase efficiency, the hot combustion gases are typically also passed through a heat exchanger to cool the gases to on the order of about 150° C before being emitted from a smoke stack. In a typical heat exchanger, the hot combustion gases are passed through a bundle of tubes containing a heat transfer fluid (typically water) which remove a portion of the heat from the gases. The heat exchanger tubes can be cool enough to allow for the condensation and deposition of alkali salts, alkali and alkaline earth sulphates, and chlorides such as sodium or potassium chloride from the combustion gases followed by deposition of silica-rich ash particles, which can result in fouling of the heat exchanger tubes.

Some waste to energy power plants may include systems that operate using, for example, a process sometimes referred to as a "fluidized-bed combustion" process. One example of such a process is a bubbling fluidized-bed combustion process, which may be used for electric power generation. Some examples of fluidized-bed reactors may include bubbling fluidized bed boilers (BFBs), stationary fluidized-bed boilers, revolving fluidized-bed boilers, gasifiers, combustors, and steam generators, and typically, circulating fluidized-bed reactors have an upright furnace or boiler.

During operation, waste fuel, for example, particulate municipal solid waste fuel, is introduced into a lower part of a furnace, and primary and secondary gases, for example, air, may be supplied through a bottom and/or sidewalls of the furnace. Combustion of the fuel takes place in a bed of fuel particles and other solid particles, such as, for example, calcium carbonate, which may be included for sulfur dioxide capture, and/or inert material. For example, a fluidized-bed reactor (i.e., furnace) may be configured to suspend the bed of fuel particles and other materials on upward-blowing jets of the primary gas during the combustion process. The upward-blowing jets facilitate mixing of the fluid particles and other materials, which serves to improve combustion by, for example, reducing undesirable emissions and increasing combustion rate and heat transfer efficiency.

Some waste to energy power plants may include systems that operate using pulverized-fuel combustion, in which fuels are injected in the combustion chamber as fine powder. In pulverized-fuel combustion a higher temperature profile in the combustion chamber is obtained compared to other combustion technologies. The fine particles are injected through burners in the lower part of the combustion chamber together with gases, for example, air, and due to the fine fuel particle size and the high oxygen concentration a high temperature flame is produced. Wastes burned using this technology are typically wood wastes.

Some waste to energy power plants may include systems operating a grate furnace, with a stationary or movable grate (traveling, vibrating, oscillating, rotary, etc.). The fuels may be introduced in the combustion chamber either continuously or intermittently where they undergo combustion on a supporting grate. Air may be supplied to the combustion chamber from underneath and from the sides of the grate to promote an efficient combustion.

Some power plants may include gasifiers that apply the gasification process. Gasification can be used to produce clean gas fuel from less pure solid fuels or wastes. In the gasification process, a fuel is heated to temperatures of about 400 to 900°C, or even higher in an oxygen deficient environment (under-stoichiometric oxygen concentration for combustion). At these temperatures and gas environment complex organic molecules are broken into lower molecular weight chains.

Exhaust gas and/or solid particles entrained in the bed or in the flue gas may leave the furnace via an exhaust port in, for example, an upper part of the furnace and may be passed to a particle separator. In the particle separator, most or substantially all of the solid particles may be separated from the exhaust gas. Typically, one or more cyclones, which use tangential forces to separate particles from exhaust gas, or Electrostatic Precipitators (ESP), which use electrostatic forces to separate particles from exhaust gas, are coupled with the furnace. During normal operation, cyclones and ESP may be capable of separating about 99.9% of the particles from the exhaust gas.

The exhaust gas and any remaining solid particles, or ash, may then be passed through additional processing units before ultimately being released into the atmosphere. For example, in an atmospheric circulating fluidized-bed system, the exhaust gas flows through a boiler and past its boiler tubes containing a supply of water, providing heat to convert the water to steam. The steam may then be used to drive a steam turbine, generating electricity. The exhaust gas may be passed through a heat exchanger to recover at least a portion of the heat generated during the combustion process, and the exhaust gas may be passed through environmental processing units to reduce levels of undesirable emissions, such as pollutants, for example, nitrogen oxides ("NOx"), sulfur oxides ("SOx"), and/or particulate matter ("PM").

Combustion of the fuel particles and/or heating of other materials (e.g., calcium carbonate bed materials) may result in heating of alkali-containing materials, such that alkali compounds contained therein are released. The released alkali compounds may react with ash or other inorganic components present in the fuel, such as, for example, sulfur, chlorine, and/or silica, which may result in undesirable deposits, ash accumulation on the bed, grate and/or furnace walls and tubes, and/or corrosion occurring on exposed surface areas of the combustor components, for example, on furnace wall refractories and/or boiler metallic tubes. Such ash accumulation, deposits and corrosion may lead to less efficient operation and/or lost production due to increased maintenance-related down time. Without being limited by theory, the alkali compounds may be released in a liquid or vapor form, which may be entrained in the exhaust gas. The alkali compounds may condensate on the combustor surfaces and cause ash particles to stick together, leading to fouling and an undesirable ash accumulation (e.g., on boiler tubes) on the reactor system surfaces. Without being limited by theory, the alkali components combined with other inorganic components of the ash may form an eutectic mixture that may form slags and deposits containing a high content of liquid phase on the reactor surfaces.

Additionally, combustion or heating of the fuel particles may release into the flue gas other corrosive and dangerous volatiles, such as chlorine, sulfur, fluorine, toxic metals and other metals (e.g. mercury, lead, cadmium, chromium, arsenic, antimony, zinc, vanadium, barium, nickel, cobalt, copper, manganese, tin). Chlorine, sulfur and some toxic metals, such as lead, may condense together with the alkalis on the surfaces of the combustor and on the ash particles or precipitate in the form of very fine particulate matter (aerosol particles below 1µm). At least a portion of the toxic metals entrained in the flue gas, notably mercury, stay in vapor form throughout the combustor system. Fluorine may combine with hydrogen present in the flue gas and form hydrogen fluoride vapor (HF), which is extremely corrosive for the combustor components such as walls, tubes and flue gas treatment equipment, such as cyclones, electrostatic precipitators (ESP), selective catalytic reduction catalysts (SCR) and on the like. At least part of the aerosol particles and toxic vapor containing chlorine, fluorine and toxic metals may scape the flue gas treatment system, being emitted into the atmosphere through the stack.

As a result, it may be desirable to remove at least a portion of the alkali compounds and other undesirable inorganic volatiles, such as sulfur, chlorine, fluorine and toxic metals, from the furnace before they react with the ash and/or other inorganic components, for example, to reduce or prevent undesirable deposits, corrosion, formation of fine particulate matter and emission of toxic vapor compounds.

Additionally, it may be desirable to increase the crystallization ability of the ashes, its crystalline fraction and its viscosity and, consequently, rendering ash more refractory, less sticky, less deformable and less prone to undergo deposition and densification on the exposed surfaces of the combustor components. WO 2013/093097 relates to mineral additive blend compositions and a method for operating a furnace including introducing a fuel and a mineral additive blend comprising a clay and a functional mineral into the furnace, heating at least a portion of the inorganic compound-containing material and clay such that at least a portion of the clay is at least partially calcined and the at least partially calcined clay and functional mineral adsorbs at least a portion of the inorganic volatile compounds present in the furnace and react with the ash produced during fuel combustion.

### SUMMARY

In the following description, certain aspects and embodiments will become evident. It should be understood that the aspects and embodiments, in their broadest sense, could be practiced without having one or more features of these aspects and embodiments. It should be understood that these aspects and embodiments are merely exemplary. The invention is defined in and by the appended claims.

According to the invention, a method for combusting waste material comprising: providing a fuel comprising a waste material, said fuel having an ash content of at least 1.5%; introducing the fuel into the combustion zone of a furnace and combusting the fuel to produce ash; and injecting 0.1% - 12% by weight of the fuel of an aluminosilicate-containing mineral additive directly into the flue gas above the combustion zone of the furnace to minimize contact of the mineral additive with the fuel or ash and to direct the mineral additive particles parallel to the direction of flue gas flow, whereby the solid-gas reactions between the mineral additive and the volatile compounds in the flue gas are favored, wherein the mineral additive captures alkali, toxic metal compounds and/or fluorine from the flue gas, thereby reducing the presence of soluble toxic metal compounds, chlorides and/or sulphates in the ash and hydrofluoric acid, alkali and/or toxic metal volatile compounds in the flue gas.

In another aspect, the combustion can occur in a grate furnace, a stoker combustor, a fluidized bed combustor, a pulverized fuel combustor or a rotary furnace.

In one aspect, the fuel used in the combustion can be a mixed heterogeneous waste, such as for example a municipal solid waste, a biomass waste, an animal waste, or an industrial waste. In another aspect, the fuel can include a contaminated biomass waste. In one aspect, the fuel used in the combustion can have an ash content of at least 10%, such as for example at least 20% by weight.

In another aspect, the mineral additive can include an aluminosilicate. For example, the mineral additive can include a mineral selected from kaolin, halloysite, ball clay, bauxitic clay, calcined clay, smectite, bentonite. clayey marl, marl, calcareous marl, andalusite, kyanite, sillimanite, perlite, mica, chlorite, attapulgite or palygorskite and pyrophyllite.

In one aspect, the amount of mineral additive used can range from 0.1% to 5% by weight of the fuel, such as for example from about 1% to 5% by weight or 2% to about 5% by weight. In another aspect, the mineral additive can have a median particle size (d50) of below about 45 microns.

In yet another aspect, the mineral additive can include an alkaline earth containing mineral, such as for example calcium carbonate, limestone, marble, chalk, dolomite, aragonitic sand, sea shells, coral, cement kiln dust, talc, brucite and magnesium carbonate or a calcium carbonate or magnesium carbonate containing mineral. In yet another aspect, the mineral additive can further include a high surface area silicate mineral, such as a diatomite-containing mineral.

In one aspect, the mineral additive can include an aluminosilicate and can be added to achieve a stoichiometric ratio ranging from 10% to 150% of the alkali in the fuel available for the reactions:

K₂O + Al₂O₃.2SiO₂ → 2KAlSiO₄ (1)

and

Na₂O + Al₂O₃.2SiO₂ → 2NaAlSiO₄ (2)

and

2KCl + Al₂O₃.2SiO₂ + H₂O → 2KAlSiO₄ + 2HCl (3)

and

2NaCl + Al₂O₃.2SiO₂ + H₂O → 2NaAlSiO₄ + 2HCl (4)

and

2KOH + Al₂O₃.2SiO₂ → 2KAlSiO₄ + H₂O (5)

and

2NaOH + Al₂O₃.2SiO₂ → 2NaAlSiO₄ + H₂O (6)

and

K₂SO₄ + Al₂O₃.2SiO₂ + H₂O → 2KAlSiO₄ + H₂SO₄ (7)

and

Na₂SO₄ + Al₂O₃.2SiO₂ + H₂O → 2NaAlSiO₄ + H₂SO₄ (8)

The excess of aluminosilicate being added sometimes with the aim to increase its availability to capture toxic metal volatiles and fluorine in the flue gas.

In another aspect, mineral additive can include a calcium- or magnesium-containing mineral, and can be added to achieve a stoichiometric ratio ranging from 10% to 150% of fluorine or chlorine available for the reactions:

CaO + 2HF → CaF₂ + H₂O (9)

and

CaO + 2HCl → CaCl₂ + H₂O (10)

and

MgO + 2HF → MgF₂ + H₂O (11)

and

MgO + 2HCl → MgCl₂ + H₂O (12)

In another aspect, the mineral additive can be injected into the furnace at a desired location. For example in one aspect, the mineral additive can be injected with secondary or tertiary air into the furnace. In another aspect, the mineral additive can be injected directly into the flue gas above the combustion zone of the furnace. In yet another aspect, the mineral additive can be injected into a heat convective zone of the furnace. In yet another aspect, the mineral additive can injected via a Selective Non-Catalytic Reduction (SNCR) De-NOx system, with or without ammonia- or urea-based compounds. The SNCR De-NOx system is usually used to promote the reduction of NOx in the flue gas by the injection of an ammonia- or urea-containing compound into the furnace gases in the temperature range between 760°C to 1100°C, preferably between 850°C and 950°C, through multiple injection levels (four or higher). The high temperatures needed to achieve efficiency in SNCR De-NOx can require that the ammonia- or urea-containing compounds are injected into the upper part of the combustion chamber. Examples of combustors designed to have the suitable gas temperature zone are those used in the combustion of municipal solid waste and biomass. Therefore, using the SNCR De-NOx system can be an efficient means to increase the mineral additive efficiency to capture volatile compounds in the flue gas by minimizing its contact with the fuel or ash.

In one aspect, the mineral additive can be injected into the furnace as a powder. In another aspect, the mineral additive is injected into the furnace as a slurry. In another aspect, the mineral additive is injected into the furnace as an aggregate or agglomerate.

Aside from the structural and procedural arrangements set forth above, the embodiments could include a number of other arrangements, such as those explained hereinafter. It is to be understood that both the foregoing description and the following description are exemplary only.

### DESCRIPTION OF EMBODIMENTS

Reference will now be made in detail to a number of exemplary embodiments. Fuel may be combusted in a furnace to produce heat, and the heat produced may, in turn, be used to generate electric power, via, for example, a steam generator. Heating the fuel and/or materials (e.g., calcium carbonate) associated with a combustion process may result in release of inorganic components in the furnace, such as alkalis, alkaline earths, sulfur, chlorine, fluorine, oxides and metals (iron, zinc, antimony, vanadium, arsenic, cadmium, barium, lead, mercury, nickel, chromium, cobalt, copper, tin, manganese).

According to some embodiments, a mineral additive may be added to the furnace, and the heat may at least partially calcine the mineral additive, such that the at least partially calcined mineral additive captures at least a portion of the alkali and/or inorganic volatile compounds within the furnace. Additionally, the mineral additive may come into contact with the forming ashes and act as nucleation sites on the ash surfaces, increasing its crystallization ability, its crystalline fraction and its viscosity, resulting in more refractory ashes. Consequently, the mineral additive renders ashes less sticky, less deformable and less prone to undergo deposition and densification on the exposed surfaces of the combustor components.

The combustion can occur in a grate furnace, a stoker combustor, a fluidized bed combustor, a pulverized fuel combustor, a rotary furnace, or any other furnace configured to burn waste.

The fuel used in the combustion can be a mixed heterogeneous waste, such as for example a municipal solid waste, a biomass waste, an animal waste, or an industrial waste. Municipal solid waste can include, for example, domestic household waste, sewage sludge, medical or hospital waste, furniture, tires, textiles, plastics, rubber, cartons and the like. Animal waste can include, for example, meat scraps, bone fragments, bone meal, litter, manure, and other substances generated by or from animal production and processing. Biomass can include, for example, agricultural waste, forest residues, waste wood, demolition wood, chipboard, fiberboard, plywood, wood pallets and boxes, and other plant-based substances generated by forestry or farming. In another aspect, the fuel can include a contaminated biomass waste such as demolition wood, furniture wood, currency shredded, refuse-derived fuel. Industrial waste can include, for example, industrial sludge, paper pulp sludge, waste paper, waste paperboard, furniture, textiles, plastics, rubber, cartons and tannery waste.

Fuel based wastes differ from the more homogeneous fuels commonly used in fossil fuel based power plants in several aspects. Waste fuels tend to have a much wider variety of shapes, sizes, and in some instances plasticity and flowability, especially in cases where plastic or rubber are present.

The composition of waste fuels can also vary greatly, depending on source. Ash content can range from as low as 0.4% by weight (for plywood waste) to as high as 75% by weight (for aged cattle manure). This can lead to the production of a greater amount of bottom ash than fly ash.

In one aspect, the fuel used in the combustion can have an ash content of at least 10%, such as for example at least 20% by weight, at least 30% by weight, at least 40% by weight or greater than about 50% by weight.

The relatively high ash content of waste fuels can lead to several undesirable effects. For example, slag formation and/or bottom ash agglomeration can occur on the grate or furnace bed, blocking fuel feeding and ash removal. It is necessary to maintain controlled ash removal flux from the grate or the fluidity of the fluidized bed in order to maintain a regular fuel feeding, guarantee a steady and efficient combustion and suitable boiler operation and availability. Furthermore, ash, slag and deposits can be chemically reactive and can damage refractory wall linings and other furnace components, as large amounts of volatiles can be released from waste fuel into the flue gas, including for example sodium, potassium, sulphur, chlorine, fluorine, phosphorous, and metals (e.g., Hg, Pb, Cd, Cr, As, Sb, Fe, Zn, V, Ba, Ni, Co, Cu, Mn, Sn) and subsequently condensate on the combustor surfaces. Flue gas containing fluorine compounds (e.g., HF) produced by combustion of plastics and other synthetic materials can be especially corrosive.

In some cases, incineration of large waste volumes can be more important than high energy production. Legislation imposes constraints on ash disposal, flame temperature for burning dioxins and furans and emissions of toxic metal compounds and fine particulate matter. Ashes containing high amount of soluble sulfates, chlorides and toxic metal compounds usually have to be landfilled (with the exception of biomass ashes).

In one aspect, it can be beneficial in some cases to introduce the mineral additive in such a manner to maximize its contact with and subsequent interaction with the forming ashes, for example, fly ash, bottom ash, and slag. Such application can provide a number of benefits such as: reduction of slagging, increased slag friability, minimization of falling of large pieces of slag from the upper parts of the combustor that can cause bed defluidization, improved fuel feeding flux into the combustion chamber, improved combustion efficiency, easier or more efficient slag and ash removal from the combustion chamber (from walls, grate, and/or bed), stabilization of heat release rate, improved ash chemical resistance in wet environments and reduction of leaching of toxic metals in aqueous solutions. Such application can also improve the characteristics of the bottom ash and fly ash, as well as increase the ratio bottom ash to fly ash generated, increasing its quality and suitability for use in applications such as road base materials, construction filler materials, and create the possibility to explore new end-uses. In addition to the effect on the ash and combustion properties, the mineral additive added at low dosages in intimate contact with the fuel can still beneficially capture part of the volatile alkalis released during combustion before coming into contact with the forming ashes, also contributing to reduce the partial pressure of alkali chlorides and sulphates (NaCl, KCl, Na₂SO₄, K₂SO₄) in the flue gas and thereby the condensation of alkali salts on the heat-exchanger tubes, i.e. fouling. By the reduction of fouling, corrosion is also reduced and heat transfer in the heat exchangers is improved. This benefit can be obtained as long as the dosage of the mineral additive is at least 10% of the stoichiometric ratio of the alkali in the fuel available for the reactions between the mineral additives and the alkali volatiles (1) to (8) described previously.

Adding the mineral additive to the furnace in a manner such that contact with the ash surfaces is maximized can induce surface crystallization of the ash. Ash agglomeration and slagging generally involves a mechanism of coalescence of individual ash particles followed by sintering. Coalescence and sintering of ash particles are strongly dependent on the mass transport mechanisms taking place on the ash surface. Viscous flow of molten ash particles can be the primary mass transport mechanism leading to coalescence and sintering of ash particles during ash agglomeration and slagging. Mineral additives can act as nucleation sites for crystals on the molten ash surfaces. Crystallization of the ash surfaces prevents the viscous flow and consequently the coalescence of ash particles, thereby hindering sintering. Slags and ash agglomerates eventually formed have higher porosity and increased friability. Gas permeability through the forming ashes is also increased, which allows an even flow of air and combustion gases through the fuel and forming ash particles, avoiding punctual increase of gas velocity and therefore avoiding fine ash particles to be entrained into the flue gas. As a result a reduction of the amount of fly ashes is promoted. In this way the ratio bottom ash to fly ash generated is increased.

Relatively low amounts of well-dispersed fine mineral additive particles can be sufficient to induce surface crystallization of ash, such as from about 0.2% to about 15% by weight in comparison to the weight of the fuel. For example, crystallization can be induced by the mineral additive particles on the ash surface by the introduction of a large number of nucleation sites and by the local increase of the concentration of the elements Al₂O₃ and/or MgO and/or CaO on the ash surface. Surface crystallization induction performance can be favoured by the use of clays having single silicate sheet structure (1:1 clays). Surface crystallization of ashes decreases ash agglomeration and densification, hindering slag formation. The resultant slags have increased porosity and friability leading to the easy reduction of the slag into small pieces. Large slag pieces falling from the combustor upper parts on the fluidized bed can be avoided. Slags and bottom ashes are also more easily evacuated from grate and fluidized bed boilers, so that fuel feeding and ash removal from the grate and fluidized bed is maintained constant. Combustion of the fuel is improved by two factors, a better and regular fuel feeding into the combustor and the higher porosity and permeability of the forming ashes during combustion which allow a better access of oxygen to the combustion reaction of the fuel material.

In another aspect, alkali and toxic metals localized on the ash surface (either originating from adsorption or condensation on the ash surface) can be immobilized by crystallization and fixed into crystalline 3D structures, reducing their availability for the formation of soluble chlorides and sulfates. In this way, the resulting bottom ash also has improved chemical resistance in wet environments and leaching of toxic metals by aqueous solutions is considerably reduced. The characteristics and quality of the resulting bottom ash improves its suitability for use in applications such as road base materials, construction filler materials, and create the possibility to explore new applications otherwise not allowed.

For example, the mineral additive can be added to the waste fuel prior to its introduction into the boiler. In some cases it can be beneficial to co-process the waste fuel and mineral additive by subjecting them to mechanical processes such as pressing, compacting, grinding, shredding, shearing, cutting and the like or by subjecting them to thermal processes or pre-heating. In another example, the mineral additive can be introduced by spraying it as a slurry onto the waste fuel prior to its introduction into the boiler. In another example, the mineral additive can be injected directly onto the waste fuel during its introduction into the boiler. In yet another aspect, in a fluidized-bed combustor, the mineral additive can be introduced through the bed material feeding or re-feeding system or be injected directly onto the fluidized-bed. In yet another example, the mineral additive can be introduced into the boiler as a powder, agglomerate, or slurry with the primary air.

In cases where the mineral additive is added in a manner to maximize contact with the waste fuel and ashes, the dosage of mineral additive can be adapted to ensure that sufficient mineral additive is provided to interact with the anticipated ash content produced by the fuel. For example, it can be beneficial to provide the mineral additive in an amount ranging from about 1% to about 100% by weight in comparison to the non-volatile ash content of the fuel. This can range from about 0.2% by weight in comparison to the fuel in cases where the waste fuel is a wood waste, to 15% in cases where the waste fuel includes sewage sludge or aged cattle manure. In some aspects, the mineral additive can include kaolin, ball clay, bauxitic clay, smectite, bentonite, clayey marl, marl, calcareous marl, other clays, and/or refractory aluminosilicate minerals such as halloysite, calcined clay, andalusite, kyanite, sillimanite, perlite, mica, chlorite, attapulgite or palygorskite and pyrophyllite.

In some aspects the mineral additive can include one or more of the above, and a second mineral such as a calcium based mineral or a magnesium based mineral , such as calcium carbonate, limestone, marble, chalk, dolomite, aragonitic sand, sea shells, coral, cement kiln dust, talc, brucite and magnesium carbonate.

In another aspect, the mineral additive can be added to the combustion zone or furnace in a manner intended to maximize the reaction of the mineral additive with flue gas constituents, while minimizing direct contact with the fuel and ash. Such introduction mode favors reactions between mineral additive particles and volatile compounds released in the flue gas during combustion of wastes.

According to this aspect, mineral additive is introduced in a manner to avoid contact with solid or liquid ash and the fuel. For example, in grate boilers the mineral additive particles can be injected in the flue gas flux after the fuel introduction zone, thereby avoiding contact with the fuel and the bottom ash in the grate. In bubbling fluidized bed boilers, the mineral particles can be injected in the flue gas flux after the fluidized bed. These injection modes are intended to direct the mineral additive particles parallel to the direction of flue gas flow in order to avoid projection of the mineral particles onto slags and deposits at the bottom of the combustion zone.

When the mineral additive is added directly to the flue gas, benefits can include: reduction or elimination of salt deposits formation on the heat-exchanger tubes, reduction of corrosion of the combustor building materials due to the reduced amount of deposits and modification of the composition (lower in alkalis, chlorides and sulphates) and structure of deposits eventually formed (being more porous and easily removed by the flue gas turbulence), reduction of toxic metals or other metal compounds such as Hg, Pb, Cd, Cr, As, Sb, Fe, Zn, V, Ba, Ni, Co, Cu, Mn, Sn emissions into the environment, reduction of fine particulate matter emissions (aerosols < 1µm), reduction of water soluble chlorine and sulphates in the fly ash, increased fly ash chemical resistance and consequently reduction of the leaching of toxic metals in aqueous environments, improvement of fly ash quality for safer and less expensive landfilling, improvement of fly ash quality for use as construction material filler (i.e. improve pozzolanic properties for application in cements), reduction of corrosion of metallic parts and refractories caused by alkali salts and HF vapour, and an increased lifetime of flue gas treatment equipment (cyclones, SCR, ESP, etc.). Additionally, in the case that the mineral additive particles eventually come into contact with the fly ashes, all the benefits of increasing the crystallization ability of the ashes and its crystalline fraction is obtained. The resulting fly ashes is then more refractory, less sticky, less deformable and less prone to undergo deposition and densification on the exposed surfaces of the combustor components.

According to this aspect, mineral additive particles can be in a powder or slurry form to facilitate dispersion into individual mineral particles during injection into the combustion chamber in order to maximize reaction rate with the flue gas compounds. The dispersion of the mineral additive into individual particles coupled with the maximization of the exposition time of the individual particles in the flue gas results in increased total reaction yield between the mineral additive and the volatile compounds in the flue gas.

Dispersion of the mineral additive into individual particles can be effective to increase the exposure of the oxygen-rich mineral surfaces. These oxygen-rich mineral surfaces then can act to increase the oxidation of volatile toxic metal elements released during waste combustion such as Pb, Hg, As, Cd, Cr, Sb, Co, Cu, Ba, Mn, Ni, V, Sn, Zn leading to the formation of the corresponding metal oxides on the mineral surface and effectively immobilizing the metals. Furthermore, at the high operating temperatures in the heat radiant or convective zone (between 600°C and 1200°C), the oxidized metals ions formed on the mineral particles surface are also capable of diffusing into the mineral particle and becoming fixed in the mineral three-dimensional aluminosilicate structure. Diffusivity of metal elements into the mineral particles, and consequently metal fixation in the aluminosilicate structure, increases with temperature, therefore, in one aspect, mineral additive can be injected in a high temperature zone (between 600°C and 1200°C) of the boiler.

Mineral additives having a silicated surface are also able to react with HF contaminants in the flue gas, which can arise during the combustion of some plastics and synthetic polymers (fluoropolymers). HF can react with the silicate network structure of silicate minerals through the reaction: HF + - Si - O - Si - → - Si - OH + - Si - F incorporating fluorine in its structure. Clays having a double silicate sheet structure (2:1 structure) can provide a relatively high reaction rate with toxic metal elements and fluorine. Diatomite also has a highly porous silicate structure and high surface area and can be added to the mineral additive blend to increase the effectiveness of reaction with toxic metal and fluorine volatile compounds in the flue gas. In one aspect, calcium- and magnesium-containing minerals can also be blended with aluminosilicate mineral additives in order to enhance the reaction of the mineral additive with fluorine and chlorine, forming CaF₂, CaCl₂, MgF₂, MgCl₂, and capture volatile phosphorus compounds. Accordingly, by introduction of mineral additive to the flue gas, the HF content can be reduced upstream of the flue gas treatment system, and corrosion can also be reduced.

According to this aspect, the mineral additive can be added to a dosage ranging from 10% to 150% or higher of the stoichiometric ratio of the alkali in the fuel available for the reactions K₂O + Al₂O₃.2SiO₂ → 2KAlSiO₄ and Na₂O + Al₂O₃.2SiO₂ → 2NaAlSiO₄, or any of the former reactions from (1) to (8) between aluminosilicates and alkali compounds such as NaCl, KCl, NaOH, KOH, Na₂SO₄, K₂SO₄ presented before. The excess of aluminosilicate being added sometimes with the aim to increase its availability to capture toxic metal volatiles and fluorine in the flue gas; CaCO₃ or any calcium- and magnesium-base compound content ranging from 10% to 150% of the stoichiometric ratio of the fluorine and chlorine in the fuel available to form CaCl₂ or CaF₂ or MgCl₂ or MgF₂. Typically, according this aspect, the dosage can range from about 0.1% by weight on a fuel basis for wood waste, to as high as 12% or greater by weight on a fuel basis for sewage sludge, paper pulp sludge or animal waste.

According to this aspect, it can be preferable to inject the mineral additive with the secondary or tertiary air into the boiler in a powder or slurry form. Secondary and tertiary air is injected to ensure complete combustion of the gas phase organic components volatilized from the waste fuel during combustion with primary air. Alternately, the mineral additive can be injected into the flue gas above the flame or fluidized bed in the radiant heat zone of the boiler in powder or slurry form. The mineral additive can also be injected into the heat convective zone of the boiler in powder or slurry form. Alternately, the mineral additive can be injected into the flue gas via a SNCR De-NOx system with or without ammonia- or urea-containing compounds.

In accordance with this aspect, the mineral additive can include one or more of ball clay, kaolin, or other aluminosilicate minerals or clays. In another aspect, the mineral additive can include a blend of an aluminosilicate mineral with a calcium- or magnesium-based mineral. In another aspect, the mineral additive can include a blend of an aluminosilicate mineral with a silica mineral, e.g., diatomite.

According to some embodiments, a method of operating a furnace may include at least the steps of introducing an inorganic compound-containing fuel material into a furnace, introducing a mineral additive having a moisture content of at least about 5% (e.g., a moisture content ranging from about 5% by weight to about 15% by weight) into the furnace, and removing at least a portion of the mineral additive from the furnace or its exhaust gas stream.

According to some embodiments, the mineral additive may include lump clay, for example, hydrous clay that may be partially dried to a moisture content ranging from at least about 1% by weight to at least about 50% by weight. According to some embodiments, the lump clay may be partially dried to a moisture content ranging from about 4% by weight to about 16% by weight, for example, from about 8% by weight to about 12% by weight (e.g., about 10% by weight), from about 5% by weight to about 10% by weight, or from about 10% by weight to about 15% by weight.

According to some exemplary embodiments, the clay may include one or more of lump clay, clay that has been shredded and/or crushed, non-beneficiated clay, kaolin, ball clay (e.g., clay that includes about 20-80% kaolin, 10%-35% mica, and/or 6%-65% quartz), and clay derived from overburden or process waste from a kaolin or any aluminosilicate mining operation (e.g., clay derived from material located over kaolin deposits being mined). According to some embodiments, the clay may have a BET surface area of at least about 9 m²/g, for example, at least about 10 m²/g or at least about 15 m²/g.

In some embodiments, the mineral additive may be at least partially converted to a calcined mineral additive in a furnace. In some embodiments, the at least partially calcined mineral additive may serve to capture at least a portion of alkali present in the furnace. In some embodiments, the mineral additive may come into contact with ash in order to act as nucleation sites for crystallization of the ashes surface, thereby, increasing its crystallization ability, crystalline fraction and its viscosity, eliminating viscous flow and the coalescence of the ashes. Sintering of the ash particles is avoided or hindered as a result of more refractory ashes.

Before the mineral additive is introduced to the furnace, the size of at least one of the mineral additive may, in some embodiments, be subjected to at least one physical modification process. For example, physical modification process(es) may serve to reduce the size of the mineral additive to, for example, about 1 inch (2.54 cm) or less. In some embodiments, an exemplary physical modification process may reduce the size of the mineral additive to about 3/4 inch (1.91 cm) or less, for example, to about 1/2 inch (1.27 cm) or less. In some embodiments, the exemplary physical modification process may reduce the size of the mineral additive to about 1/4 inch (0.64 cm) or less (e.g., to about 1/8 inch (0.32 cm) or less). In other embodiments, the mineral additive may comprise clay agglomerates having a maximum lump size of not more than about 3 inches (7.62 cm), such as not more than about 2 inches (5.08 cm) or not more than about 1 inch (2.54 cm). Exemplary physical modification processes may include at least one of milling, hammering, roll crushing, drying, grinding, screening, extruding, triboelectric separating, liquid classifying, and air classifying.

According to some embodiments, inert material may be introduced into the furnace as a fluidization media. Exemplary inert materials may include, for example and without limitation, sand, residues of fuel, and/or gypsum. In some embodiments, a fine inert material may be selected to improve separation efficiency in one or more cyclones that may be associated with the furnace system.

The mineral additive used in the exemplary methods disclosed herein may take various forms and/or may have undergone various processes. For example, the mineral additive may include shredded and/or crushed clay. In some embodiments, clay may be non-beneficiated clay. As used herein, non-beneficiated clay may include clay that has not been subjected to at least one process chosen from dispersion, blunging, selective flocculation, ozone bleaching, classification, magnetic separation, chemical leaching, froth flotation, and dewatering of the clay. In some embodiments, at least a portion of the clay may be kaolin, for example, a hydrous aluminosilicate having a formula, Al₂Si₂O₅(OH)₄. In some embodiments, the clay may include ball clay. In some embodiments, the clay may include clay derived from overburden or process waste from a kaolin or any aluminosilicate mineral mining operation. In some embodiments, the clay may be clay derived from crude clay having a moisture content of at least about 15%. For example, the clay may include montmorillonitic kaolin.

The mineral additive used in the exemplary methods disclosed herein may be a combination of hydrous clays. For example, at least one hydrous clay may be selected to provide bonding strength to the combination of hydrous clays. In some embodiments, at least one hydrous clay may be selected to increase the coarseness of the hydrous clay combination.

According to some embodiments, the mineral additive used in the exemplary methods disclosed herein may have a measurable BET surface area. For example, the BET surface area may be at least about 5 m²/g, for example, the BET surface area may be at least about 10 m²/g or at least about 15 m²/g, or at least about 25 m²/g.

The mineral additive used in the exemplary methods disclosed herein may have a measurable particle size. Particle sizes and other particle size properties referred to herein, such as particle size distribution ("psd"), may be measured using a SEDIGRAPH 5100 instrument as supplied by Micromeritics Corporation. For example, the size of a given particle may be expressed in terms of the diameter of a sphere of equivalent diameter that sediments through the suspension, that is, an equivalent spherical diameter or "esd."

The measurable particle size may indicate the relative coarseness of the mineral additive. In some embodiments, about 20% to about 90% of the mineral additive has a particle size less than about 1 µm. In some embodiments, about 20% to about 70% of the mineral additive has a particle size less than about 1 µm. In some embodiments, about 35% to about 45% of the mineral additive has a particle size less than about 1 µm. In some embodiments, about 30% to about 40% of the mineral additive has a particle size less than about 1 µm. In some embodiments, about 40% to about 60% of the mineral additive has a particle size less than about 1 µm.

In some embodiments, about 20% to about 95% of the mineral additive has a particle size less than about 2 µm. In some embodiments, about 30% to about 80% of the mineral additive has a particle size less than about 2 µm. In some embodiments, about 65% to about 75% of the mineral additive has a particle size less than about 2 µm. In some embodiments, about 60% to about 70% of the mineral additive has a particle size less than about 2 µm. In some embodiments, about 70% to about 80% of the mineral additive has a particle size less than about 2 µm.

The mineral additive used in the exemplary methods disclosed herein may have a measurable washed screen residue, for example, a measurable +325 washed screen retention. For example, the +325 mesh wash screen retention may be from about 0.2% to about 9%. In some embodiments, the +325 mesh wash screen retention may be from about 0.5% to about 8%. In some embodiments, the +325 mesh wash screen retention may be from about 0.5% to about 8%. In some embodiments, the +325 mesh wash screen retention may be from about 0.5% to about 5%. In some embodiments, the +325 mesh wash screen retention may be from about 0.5% to about 1.5%. In some embodiments, the +325 mesh wash screen retention may be from about 4% to about 5%. In some embodiments, the +325 mesh wash screen retention may be from about 1% to about 4.5%. In some embodiments, the +325 mesh wash screen retention may be from about 4.5% to about 9%.

According to some embodiments, inorganic compounds-containing fuel materials may include calcium carbonate. In some embodiments, the calcium carbonate may be provided as particulate limestone, marble, chalk, dolomite, aragonitic sand, sea shells, coral, and/or mixtures thereof. In one embodiment, the inorganic compounds-containing material may include a calcium carbonate originating from a marine originating deposit, for example, wherein the inorganic compound may include residual salt from seawater.

According to some embodiments, combustion may occur in a furnace that is part of a fluidized-bed reactor system for generating electric power via, for example, a steam generator. For example, the furnace may be part of a bubbling fluidized-bed reactor system. The furnace may be part of other systems for combusting inorganic compounds-containing materials known to those skilled in the art.

The exemplary methods disclosed herein may be used in association with a variety of fuel(s) and/or inorganic compounds-containing materials. In some embodiments, the fuel may contain an alkali material.

According to some embodiments, the fuel associated with exemplary methods disclosed herein may include waste biofuel derived from, for example, biomass. Exemplary biomass sources may include, without limitation, wood, wood pellets, straw pellets, peat, lignocellulose, waste biomass, such as bagasse, wheat stalks, corn stalks, oat stalks, and/or energy biomass, such as, for example, grasses of the Miscanthus genus.

In some embodiments, inorganic compounds-containing materials may include materials selected to reduce at least one of SOx and NOx. For example, the inorganic compounds-containing material(s) selected to reduce at least one of SOx and NOx may include calcium carbonate. For example, calcium carbonate may be derived from the sea. According to some embodiments, the material(s) may include at least one of a SOx- and NOx-getter.

In addition to mineral additive, in some embodiments, the solid material particles may include at least one of a SOx- and NOx-getter and/or an inert material. An exemplary SOx-getter may include be, for example and without limitation, calcium carbonate. Exemplary inert materials may include, for example, sand, gypsum, and/or residues of fuel.

### Examples

Other embodiments of the disclosure will be apparent to those skilled in the art from consideration of the specification and practice of the exemplary embodiments disclosed herein.

### Example 1 : Combustion of Municipal Solid Waste in a Stoker Furnace

This test was performed using a kaolinite containing clay in a 20 MWe Stoker furnace burning Municipal Solid Waste. The objective of the test was to demonstrate increased plant availability and thus the energy production, as well as decreased requirement for cleaning of ash deposits (using explosive + jack hammer).

The fuel used was a municipal solid waste having a fuel ash content of 28% by weight. Mineral additive was added to a dosage of 2% by weight of the municipal solid waste. The mineral additive was introduced in slurry form by spraying onto the waste fuel at the entrance to the furnace, just prior to introduction of the fuel to the conveyor to the grate.

Addition of the mineral additive had no observable adverse effect on the steam outlet temperature (maintained at 860°F) after a 3 week trial. This result would previously have required reducing the fuel feeding rate by a factor of two. Use of the mineral additive was also observed to reduce slagging at the entrance to the grate. Ash deposits appeared to be more friable and easy to clean. Bottom ash contained less unburned carbon indicating a better and more complete combustion of the fuel.

### Example 2: Combustion of Animal Waste in a Fluidized-Bed Reactor

This test was performed using a kaolinite containing clay in a 16 MWth Bubbling Fluidized-Bed reactor burning animal waste. The fuel used was a mixed animal waste including: solid waste such as meat and bone meal, dried egg, wood waste, and liquid wastes such as blood, detergent and chemical washing effluents. The fuel ash content of the solid components was 22.5% by weight and of the liquid components was 0.5% by weight. The ash content of the mixture was 7.4%.

Kaolin based mineral additive was added at a dosage of 6.3% by weight of the solid fuel, or 2.5% of the total fuel mixture. The mineral additive was mixed with the fuel prior to introduction into the combustion chamber.

Use of the mineral additive was observed to increase the operation time of the furnace from 14 days to 37-71 days. This allowed a much longer run time than was previously possible for waste containing egg shells. At the end of the run, fouling was easy to remove and the ash deposits were friable and easy to clean.

Use of the mineral additive allowed for increase of the percentage of liquid waste used. This also resulted in a slight reduction of the reactor bed temperature (from 750°C to 700°C).

## Claims

1. A method for combusting waste material comprising:
providing a fuel comprising a waste material, said fuel having an ash content of at least 1.5%;
introducing the fuel into the combustion zone of a furnace and combusting the fuel to produce ash; and
injecting 0.1% - 12% by weight of the fuel of an aluminosilicate-containing mineral additive directly into the flue gas above the combustion zone of the furnace to minimize contact of the mineral additive with the fuel or ash and to direct the mineral additive particles parallel to the direction of flue gas flow, whereby the solid-gas reactions between the mineral additive and the volatile compounds in the flue gas are favored,
wherein the mineral additive captures alkali, toxic metal compounds and/or fluorine from the flue gas, thereby reducing the presence of soluble toxic metal compounds, chlorides and/or sulphates in the ash and hydrofluoric acid, alkali and/or toxic metal volatile compounds in the flue gas.

2. The method according to claim 1, wherein the aluminosilicate comprises a mineral selected from kaolin, halloysite, ball clay, bauxitic clay, calcined clay, smectite, bentonite, clayey marl, marl, calcareous marl, andalusite, kyanite, sillimanite, perlite, mica, chlorite, attapulgite or palygorskite and pyrophyllite.

3. The method according to any preceding claim, wherein the fuel has an ash content ranging from 10% to 75%, such as for example 15% to 50% or 10% to 35%.

4. The method according to any preceding claim, wherein the aluminosilicate is added to achieve a stoichiometric ratio ranging from 10% to 150% of the available alkali in the fuel to form KAlSiO₄ and NaAlSiO₄ according to reactions (1) to (8):
K₂O + Al₂O₃.2SiO₂ → 2KAlSiO₄ (1),
Na₂O + Al₂O₃.2SiO₂ → 2NaAlSiO₄ (2),
2KCl + Al₂O₃.2SiO₂ + H₂O → 2KAlSiO₄ + 2HCl (3),
2NaCl + Al₂O₃.2SiO₂ + H₂O → 2NaAlSiO₄ + 2HCl (4),
2KOH + Al₂O₃.2SiO₂ → 2KAlSiO₄ + H₂O (5),
2NaOH + Al₂O₃.2SiO₂ → 2NaAlSiO₄ + H₂O (6),
K₂SO₄ + Al₂O₃.2SiO₂ + H₂O → 2KAlSiO₄ + H₂SO₄ (7),
and
Na₂SO₄ + Al₂O₃.2SiO₂ + H₂O → 2NaAlSiO₄ + H₂SO₄ (8).

5. The method according to any preceding claim, wherein a calcium- or magnesium-containing mineral is added to achieve a stoichiometric ratio ranging from 10% to 150% of fluorine and/or chlorine available for the reactions CaO + 2HF → CaF₂ + H₂O and CaO + 2HCl → CaCl₂ + H₂O or MgO + 2HF → MgF₂ + H₂O and MgO + 2HCl → MgCl₂ + H₂O.

6. The method according to any preceding claim, wherein the mineral additive is in a powder or slurry form.

## Patentansprüche

1. Müllverbrennungsverfahren umfassend:
einen aus Abfallstoffen bestehenden Brennstoff bereitstellen, wobei der Brennstoff einen Aschegehalt von mindestens 1,5% aufweist; den Brennstoff in die Verbrennungszone einer Feuerungsanlage einführen und den Brennstoff verbrennen, um Asche zu erzeugen; und
einen aluminosilikathaltigen mineralischen Zusatzstoff in einer Menge, die 0,1 bis 12 Gewichtsprozent des Brennstoffs entspricht, oberhalb der Verbrennungszone der Feuerungsanlage direkt in das Rauchgas einspritzen, um den Kontakt des mineralischen Zusatzstoffs mit dem Brennstoff oder der Asche zu minimieren und
die mineralischen Teilchen des Zusatzstoffs parallel zur Strömungsrichtung des Rauchgases zu führen, wobei die Feststoff-Gas-Reaktionen zwischen dem mineralischen Zusatzstoff und den flüchtigen Verbindungen im Rauchgas begünstigt werden,
wobei der mineralische Zusatzstoff Alkalien, toxische Metallverbindungen und/oder Fluore im Rauchgas einfängt und dadurch lösliche toxische Metallverbindungen, Chloride und/oder Sulfate in der Asche und Fluorwasserstoffsäure, Alkalien und/oder flüchtige toxische Metallverbindungen im Rauchgas reduziert.

2. Verfahren gemäß Anspruch 1, wobei das Aluminosilikat ein Mineral umfasst, bei dem es sich um Kaolin, Halloysit, Töpferton, Bauxit-Ton, kalzinierten Ton, Smektit, Bentonit, Tonmergel, Mergel, Kalkmergel, Andalusit, Kyanit, Sillimanit, Perlit, Glimmer, Chlorit, Attapulgit oder Palygorskit und Pyrophyllit handelt.

3. Verfahren gemäß einem der vorhergehenden Ansprüche, wobei der Brennstoff einen Aschegehalt von 10% bis 75% aufweist, beispielsweise 15% bis 50% oder 10% bis 35%.

4. Verfahren gemäß einem der vorhergehenden Ansprüche, wobei das Alumosilikat zugegeben wird, um ein stöchiometrisches Verhältnis zwischen 10% bis 150% des im Brennstoff verfügbaren Alkali zu erreichen, um gemäß den Reaktionen (1) bis (8) KAlSiO₄ und NaAlSiO₄ zu bilden:
K₂O + Al₂O₃.2SiO₂ 2KAlSiO₄ (1),
Na₂O + Al₂O₃.2SiO₂ → 2NaAlSiO₄ (2),
2KCl + Al₂O₃.2SiO₂+ H₂O → 2KAlSiO₄ + 2HCl (3),
2NaCl + Al₂O₃.2SiO₂+ H₂O → 2NaAlSiO₄ + 2HCl (4),
2KOH + Al₂O₃.2SiO₂ → 2KAlSiO₄ + H₂O (5),
2NaOH + Al₂O₃.2SiO₂ → 2NaAlSiO₄ + H₂O (6),
K₂SO₄ + Al₂O₃.2SiO₂ + H₂O → 2KAlSiO₄ + H₂SO₄ (7),
und
Na₂SO₄ + Al₂O₃.2SiO₂ + H₂O → 2NaAlSiO₄ + H₂SO₄ (8).

5. Verfahren gemäß einem der vorhergehenden Ansprüche, wobei das calcium- oder magnesiumhaltige Mineral zugegeben wird, um ein stöchiometrisches Verhältnis zwischen 10% bis 150% des für die Reaktionen CaO + 2HF → CaF₂ + H₂O und CaO + 2HCl → CaCl₂ + H₂O oder MgO + 2HF → MgF₂ + H₂O und MgO + 2HCl → MgCl₂ + H₂O verfügbaren Fluors und/oder Chlors zu erreichen.

6. Verfahren gemäß einem der vorhergehenden Ansprüche, wobei der mineralische Zusatzstoff als Pulver oder als pumpfähige Masse vorliegt.

## Revendications

1. Un procédé de combustion de déchets comprenant :
fournir un combustible comprenant un déchet, ledit combustible ayant une teneur en cendres d'au moins 1,5 % introduisant le combustible dans la zone de combustion d'un four et brûlant le combustible pour produire de la cendre; et
injecter 0,1 % - 12 % en poids du combustible d'un additif minéral contenant un aluminosilicate directement dans le gaz de combustion au-dessus de la zone de combustion du four pour minimiser le contact de l'additif minéral avec le combustible ou les cendres et diriger les particules minérales parallèlement à la direction du flux des gaz de combustion, par lequel les réactions gaz-solide entre l'additif minéral et les composés volatils dans les gaz de combustion sont favorisées,
dans lequel l'additif minéral retient des composés de métaux alcalins, toxiques et / ou du fluor du gaz de combustion, réduisant ainsi la présence de composés de métaux toxiques solubles, de chlorures et / ou de sulfates dans les cendres et l'acide fluorhydrique, les composés volatils de métaux alcalins et / ou toxiques dans les gaz de combustion.

2. Le procédé selon la revendication 1, dans lequel l'aluminosilicate comprend un minéral choisi parmi le kaolin, l'halloysite, l'argile figuline, l'argile bauxitique, l'argile calcinée, la smectite, la bentonite, la marne argileuse, la marne, la marne calcaire, l'andalousite, la cyanite, la sillimanite, la perlite, le mica, la chlorite, l'attapulgite ou la palygorskite et la pyrophyllite.

3. Le procédé selon l'une quelconque des revendications précédentes, dans lequel le combustible a une teneur en cendres allant de 10 % à 75 %, comme par exemple de 15 % à 50 % ou de 10 % à 35 %.

4. Le procédé selon l'une quelconque des revendications précédentes, dans lequel l'aluminosilicate est ajouté pour atteindre un rapport stoechiométrique allant de 10 % à 150 % de l'alcali présent dans le combustible pour former le KAlSiO₄ et le NaAlSiO₄ selon les réactions (1) à (8) :
K₂O + Al₂O₃.2SiO₂ → 2KAlSiO₄ (1),
Na₂O + Al₂O₃.2SiO₂ → 2NaAlSiO₄ (2),
,
2KCl + Al₂O₃.2SiO₂ + H₂O → 2KAlSiO₄ +2HCl (3),
2NaCl + Al₂O₃.2SiO₂ + H₂O → 2NaAlSiO₄ + 2HCl (4),
2KOH + Al₂O₃.2SiO₂ → 2KAlSiO₄ + H₂O (5),
2NaOH + Al₂O₃.2SiO₂ → 2NaAlSiO₄ + H₂O (6),
K₂SO₄ + Al₂O₃.2SiO₂ + H₂O → 2KAlSiO₄ + H₂SO₄ (7),
et
Na₂SO₄ + Al₂O₃.2SiO₂ + H₂O → 2NaAlSiO₄ + H₂SO₄ (8)

5. Le procédé selon l'une quelconque des revendications précédentes, dans lequel on ajoute un minéral contenant du calcium- ou du magnésium- pour atteindre un rapport stoechiométrique allant de 10 % à 150 % de fluor et / ou de chlore présent pour les réactions CaO + 2HF → CaF₂ + H₂O et CaO + 2HCl → CaCl₂ + H₂0 ou MgO + 2HF → MgF₂ + H₂0 et MgO + 2HCl → MgCl₂ + H₂0.

6. Le procédé selon l'une quelconque des revendications précédentes, dans lequel l'additif minéral est sous forme de poudre ou de coulis.
